# EUROPEAN PATENT SPECIFICATION

(11) **EP 3 658 409 B1**
(45) Date of publication and mention of the grant of the patent: **01.09.2021**
(21) Application number: 18880074.2
(22) Date of filing: 27.07.2018
(51) Int. Cl.: B60N 2/36, E05B 77/40, E05B 85/26

(54) **A LOCK MECHANISM FOR CAR SEATS**
VERRIEGELUNGSMECHANISMUS FÜR EINEN AUTOSITZ
MÉCANISME DE VERROUILLAGE POUR SIÈGES DE VOITURE

(30) Priority: 28.07.2017 TR 201711146
(43) Date of publication of application: 03.06.2020
(73) Proprietor: Martur Sünger ve Koltuk Tesisleri Ticaret ve Sanayi Anonim Sirketi, Nilüfer/Bursa (TR)
(72) Inventor: DOGAN, Anil, Nilüfer/Bursa (TR); SAÇAR, Ismail, Nilüfer/Bursa (TR); DAL, Murat, Nilüfer/Bursa (TR); KURT, Recep, Nilüfer/Bursa (TR); DEVECI, Ömer Osman, Nilüfer/Bursa (TR)
(74) Representative: Yamankaradeniz, Kemal
(86) International application number: PCT/TR2018/050404
(87) International publication number: WO 2019/125327

(56) References cited:
- DE-A1-102007 016 409
- DE-A1-102013 204 601
- US-A- 4 756 564
- US-A1- 2013 270 845

## Description

### Technical Field

The invention is related to a lock mechanism which is used for locking the reclining backrests on the rear seats of passenger cars and which prevents the mechanical problems that the vibrations will create due to the movement of the car.

### Prior Art

The back rests of the rear seats in passenger cars today can recline and by this means, the baggage volume of the cars can be expanded. In order to place the seats back to their prior position and keep the back rests from moving, back locks are used. The present back locks are composed of three main parts; the main hook which locks onto the car body, the support hook which bears the force to the main hook and the comfort hook which tolerates the gaps.

In today's systems, as a result of the vibration from the car reflecting on the back lock, the metal parts on the lock contact each other and this causes problems regarding noise. This situation distracts the driver during the journey and disturbs the passengers.

In addition, the springs enabling the operation of the hooks on the locks may not fit well on the connection points present on the hooks and on the covers during mounting. In another case, said springs may come loose during the use of the lock and may cause the disruption of the function of the lock. With the comfort hook locks, the comfort hook and support hook share the same working surface and since the hook which bears the force is the support hook, a rather narrow working surface is left for the comfort hook. With the production and mounting tolerances involved, comfort hook's loss of contact is in question.

The high opening and closing forces in rubber lock mechanisms which do not comprise comfort hooks, create a disadvantage. The rubber material is affected by hot and cold weather conditions and the rubber is deformed in time. In addition, the fact that these mechanisms are composed of a large number of complex parts for different comfort functions creates another disadvantage.

In the patent application numbered TR2015/17406 in the literature, a lock mechanism for the back surface of car back rest seats is described. The key elements of the lock mechanism in the subject document are composed of the main hook, the support hook and the comfort hook and it is described that a precise contact is provided between the support hook and the comfort hook and the amount of force is increased. However, in the subject application, there is no structure which hinders the noise that will be created as a result of mechanical friction in the mechanism and which prevents the dislocation of the mechanical parts described.

In another patent application numbered TR2015/17404 in the literature, a lock mechanism for the back rests of car seats is described. The key elements of the lock mechanism in the subject document are composed of the main hook, the support hook and the comfort hook and a mechanism for preventing the disadvantages of the comfort hook is developed. However, in the subject application, there is no structure which hinders the noise that will be created as a result of mechanical friction in the mechanism and which prevents the dislocation of the mechanical parts described.

In another patent application numbered DE102007016409A1 in the literature has a summary as ; in a lock (10) for a vehicle, in particular for a vehicle seat, which interacts in a locked state with a counter element (B), with a pawl (15) pivotably mounted about a first bearing pin (14), which has a receptacle (15a) for the counter element (B) and a functional surface (15b), and at least one securing element (20, 22) pivotably mounted about a second bearing pin (18), which in the locked state interacts at least temporarily with the functional surface (15b) in order to secure the locked one To secure the state of the lock (10), the counter element (B) approaches the functional surface (15b), the pawl (15) having a contact projection (30) which is in contact with the counter element (B) approaching the functional surface (15b) Contact comes before the counter element (B) can come into contact with the functional surface (15b).

Also, in another patent application numbered US2013270845A1in the literature has a summary as; A latch device for a vehicle includes: a latch configured to hold and engage with a striker; and a latchet configured to maintain an engagement condition between the striker and the latch by meshing with the latch. Between a meshing surface of the latch and a meshing surface of the latchet that mesh with each other, one meshing surface is formed narrower than the other meshing surface. A supporting member is arranged at a side of the latch or the latchet having the one meshing surface narrower than the other meshing surface with a gap provided between a side face of the latch or the latchet and the supporting member. A periphery of the supporting member including the end face is covered with a resin material and the gap is filled up with the resin material.

Consequently, due to the problems described above and the insufficiency of the present solutions on the subject, an improvement in the related field is required.

### The Purpose of the Invention

The invention is formed inspiring from the present situations and aims to solve the above-mentioned problems.

The purpose of the invention is to prevent the vibration that will be created in the lock mechanism as a result of the car movement and the noise resulting from the vibration. A purpose of the invention is to provide that the springs which move the hooks fit well in the housings and not be dislocated.

Another purpose of this invention is that it provides for preventing the comfort hook from hitting the opening pin on the support hook during operation and the pin's falling as a result of the impact.

### Figures Illustrating the Invention

**Figure 1** is an exploded view of the lock mechanism as the subject of the invention.
**Figure 2** is the perspective view of the working surface separated into two.
**Figure 3** is the side view of the working surface separated in two.
**Figure 4** is the 'A-A' cross-sectional view of the retainage surface.
**Figure 5** is the 'B-B' cross-sectional view of the point contact surface.
**Figure 6** is the 'C-C' cross-sectional view of the pawl.
**Figure 7** is the perspective view of the main hook protrusion.
**Figure 8** is the perspective view of the support hook protrusion.
**Figure 9** is the perspective view of the 'S' form of the comfort hook spring.
**Figure 10** is the side view of the retainers on the plastic cover.
**Figure 11** is the perspective view of the main hook tie piece and the support hook tie piece.

### Description of the Part References

- 1.: Lock mechanism
- 2.: Main hook
- 3.: Support hook
- 4.: Comfort hook
- 5.: Metal cover
- 6.: Opening pin
- 7.: Crankpin
- 8.: Main hook spring
- 9.: Support hook spring
- 10.: Comfort hook spring
- 11.: Plastic cover
- 12.: Working surface separated in two
- 13.: Retainage surface
- 14.: Point contact surface
- 15.: Pawl
- 16.: Main hook protrusion
- 17.: Support hook protrusion
- 18.: Comfort hook protrusion
- 19.: Retainer
- 20.: Main hook tie piece
- 21.: Support hook tie piece

### Detailed Description of the Invention

In this detailed description, the preferred embodiments of the lock mechanism (1) subject of the invention are described merely for the better understanding of the subject.

In this invention, a lock mechanism (1) which is used for locking the reclining backrests on the rear seats of passenger cars and which prevents the mechanical problems that the vibrations create with the car movement is put forward. This lock mechanism (1) contains at least one main hook (2) which provides locking onto the car body by pivoting and at least one support hook (3) coated with plastic, which bears the load corresponding to said main hook (2). At the same time, it comprises at least one comfort hook (4) which tolerates the gap with the car body and at least one metal cover (5) which holds the bearing elements in position. On the other hand, it has at least one opening pin (6) which provides for the opening and closing procedure by driving said comfort hook (4) and said support hook (3) and more than one crankpin (7) which forms a bearing for said main hook (2), mentioned support hook (3) and said comfort hook (4). In addition, it comprises at least one main hook spring (8) which brings said main hook (2) into the desired position and at least one support hook spring (9) which brings said support hook (3) into the desired position. Likewise, it comprises at least one plastic cover (11) which takes on the task of retaining the at least one comfort hook spring (10) that brings said comfort hook (4) into the desired position, said main hook (2), said support hook (3) and said comfort hook (4) and fastening said main hook spring (8), said support hook spring (9) and said comfort hook spring (10) and which protects the operating parts from external factors.

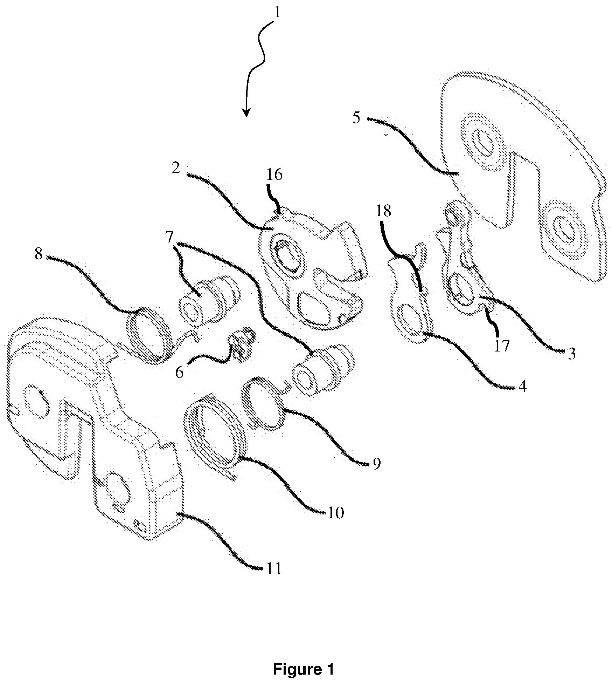

There is at least one working surface separated in two (12), which takes place on the subject main hook (2), which is composed of two parts; one part of metal and the other part of plastic, whose plastic part contacts said support hook (3) while said comfort hook (4) whose abrasion value is high is in operation at the metal part and thus, which prevents the noise problem by preventing the metal-metal contact at the first moment of enclosure. On the other hand, it comprises at least one retainage surface (13) which takes place on said support hook (3) and prevents the comfort hook (4) from hitting the opening pin (6) on the support hook (3) during idle operation by contacting said comfort hook (4) directly; and the opening pin (6) from being deformed or the opening pin (6) being dislocated as a result. Thanks to this form which takes place on the main hook (2) and which has a radius form, it comprises at least one point contact surface (14) which enables the movement of the wire by point-contacting the wire in the car body and thus, prevents the vibration originating from the car and the noise created as a result of the vibration (Figure 1).

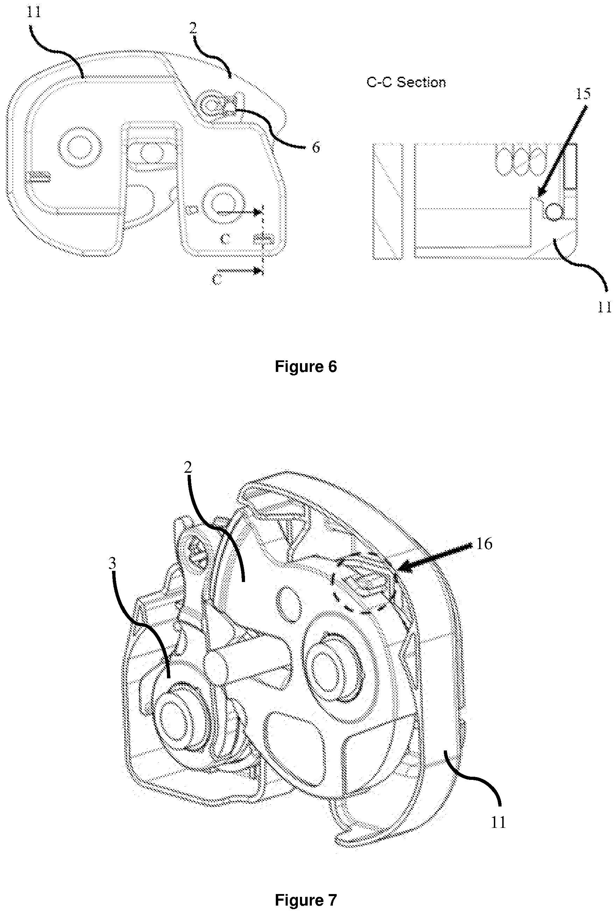

In the preferred embodiment of the invention, more than one pawls (15) which have angled surfaces take place on the plastic cover (11) (Figure 6). Thanks to the subject pawls (15), the main hook spring (8), the support hook spring (9) and the comfort hook spring (10) fit into their positions during the mounting and stay on the plastic cover (11). By this means, the main hook spring (8), the support hook spring (9) and the comfort hook spring (10) are prevented from falling out after a period of time and experience head loss or loss of function.

In the preferred embodiment of the invention, there is at least one main hook protrusion (16) which takes place on the main hook (2) and provides for attaching the main spring (8) and keeping the same from coming loose and losing function (Figure 7).

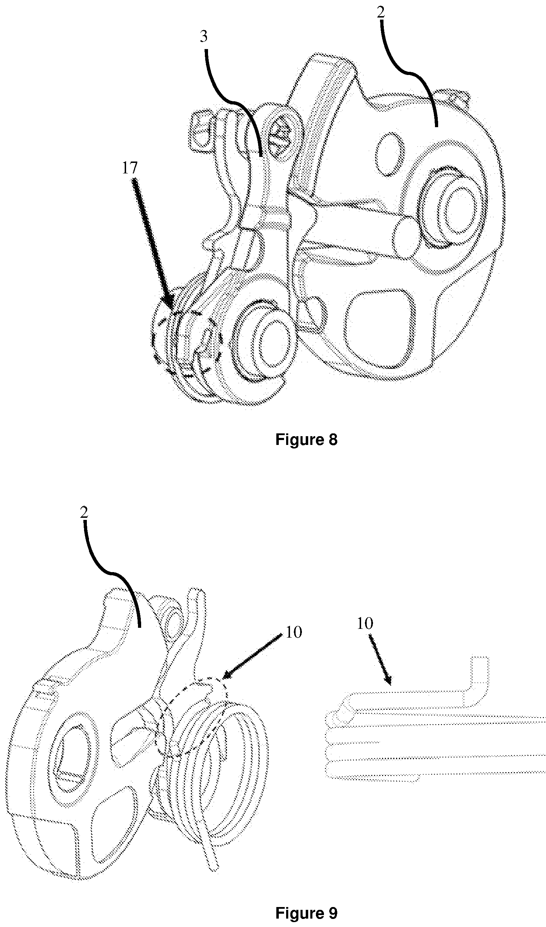

In the preferred embodiment of the invention, there is at least one support hook protrusion (17) which takes place on the support hook (3) and provides for attaching the support hook spring (9) and keeping the same from coming loose and losing function (Figure 8).

In the preferred embodiment of the invention, there is at least one comfort hook protrusion (18) which takes place on the comfort hook (4) and provides for attaching the comfort hook spring (10) and keeping the same from coming loose and losing function.

In the preferred embodiment of the invention, the surface of the comfort hook spring (11) which contacts the comfort hook (4) is in 'S' form (Figure 9). Thanks to the subject 'S' form, it prevents the comfort hook (4) from moving away from the narrow working surface by pushing the comfort hook (4) to the working surface during operation.

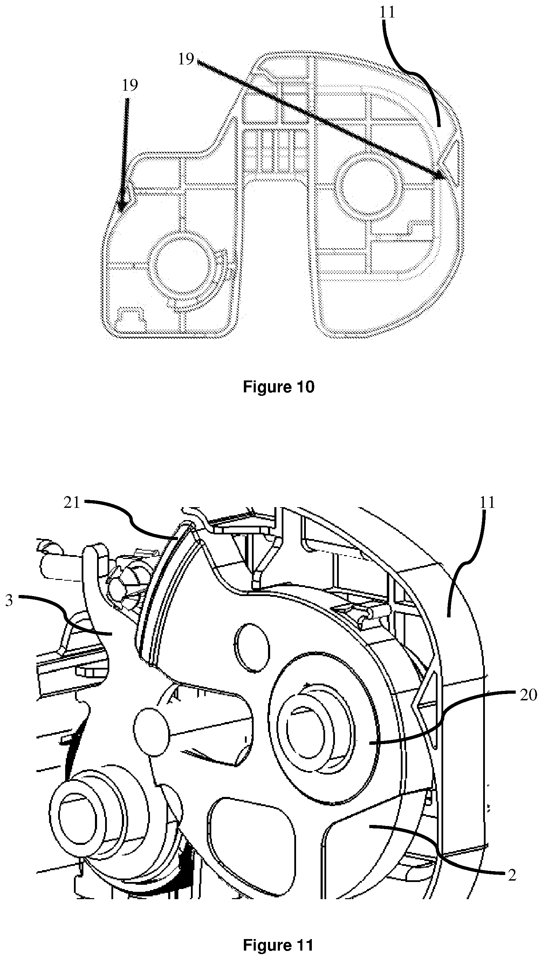

In the preferred embodiment of the invention, there are more than one retainers (19) which take place on the plastic cover (11) and which provides for retaining the main hook (2), the support hook (3) and the comfort hook (4) (Figure 10).

In the preferred embodiment of the invention, the surface of the main hook (2) which contacts the crankpin (7) is plastic. By this means, the vibration and the nose problem caused by vibration is prevented.

In the preferred embodiment of the invention there is at least one main hook tie piece (20) on the main hook (2) (Figure 11). Thanks to the subject main hook tie piece (20), the contact surface of the main hook (2) with the metal cover (5) and the operating force of the main hook (2) is decreased.

In the preferred embodiment of the invention there is at least one support hook tie piece (21) on the support hook (3) (Figure 11). Thanks to the subject support hook tie piece (21), the contact surface of the support hook (3) with the metal cover (5) and the operating force of the support hook (2) are decreased.

In the preferred embodiment of the invention, the opening pin (6) has a form that will fit closely to the support hook (3) in order to prevent dislocation of the opening pin (6) as a result of any impact.

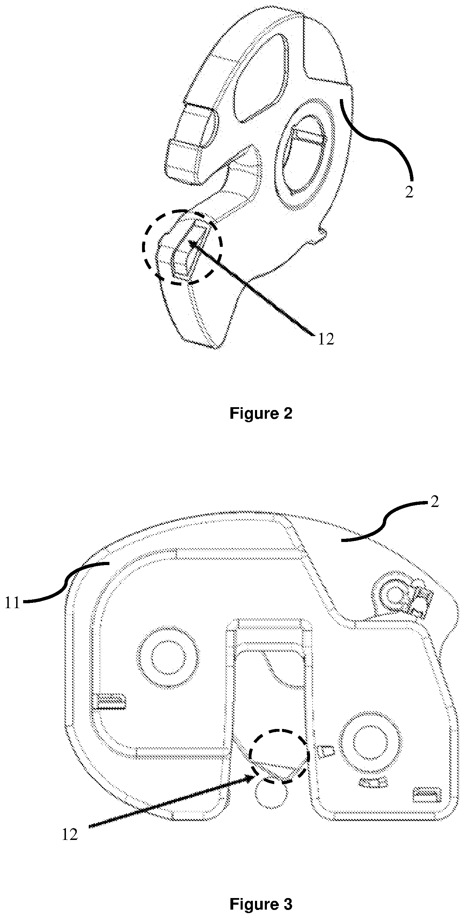

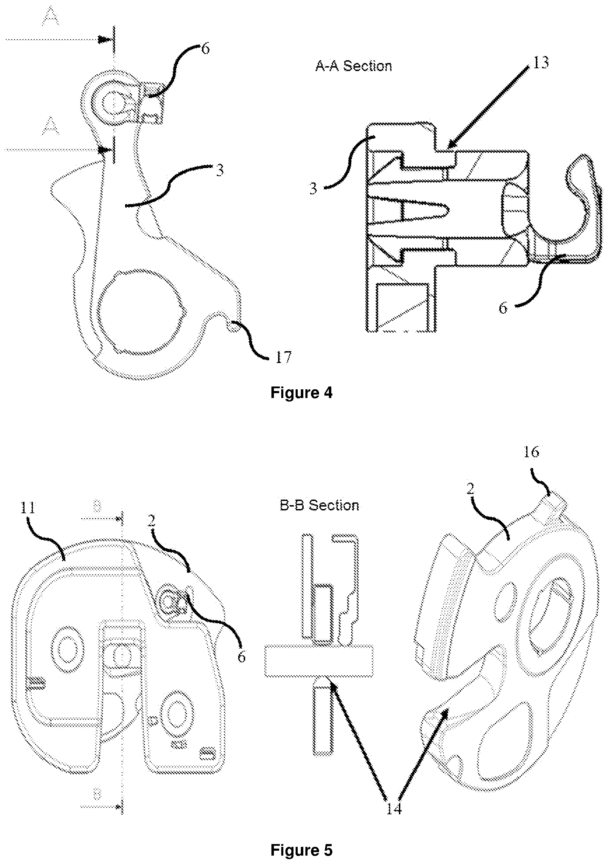

In the subject of the invention lock mechanism (1); the plastic coated main hook (2) contacts the plastic part of the working surface separated in two (12) on the car body and comes to the closed position by rotating on one of the crankpins (7) (Figure 2 and Figure 3). The comfort hook (4) comes to the position with the force of the comfort hook spring (10) by rotating on the crankpin (7). The comfort hook (4) comes in contact with the metal part of the working surface separated in two (12) and tolerates the gaps by moving the plastic coated main hook (2). The plastic-coated support hook (3) rotates on the crankpin (7) thanks to the support hook spring (9) whose one end is fixed to the plastic cover (11) by the angled surface pawl (15) and the other end to the support hook protrusion (17); and brings the lock mechanism (1) into closed position by coming into position with the support hook spring (9) force. The point contact surface (14) which has radius form in this position provides for the wire on the car to move easily and keeps the vibrations from the car from arriving at the lock mechanism (1) and the seat. Thanks to its 'S' form, the comfort hook spring (10), drives the comfort hook (4) to the working surface separated in two (12) on the plastic coated main hook (2) and keeps it in contact with the working surface separated in two (12). The support hook (3) rotates around the crankpin (7) by means of pulling the opening pin (6). In the meantime, the contact of the comfort hook (4), which starts to rotate around the crankpin (7) by contacting the retainage surface (13), and the support hook (3) with the main hook (2) is interrupted (Figure 4). With the interruption of the contact, the main hook (3) comes to the open position thanks to the spring force of the main hook spring (8) whose one end is fixed to the plastic cover (11) by the angled surface pawl (15) and the other end to the main hook protrusion (16). In this position, the main hook (2), the support hook (3) and the comfort hook (4) remain in the open position thanks to the more than one retainer (19) on the plastic cover (11).

## Claims

1. A lock mechanism (1) comprising a main hook (2), a support hook (3) which bears the load corresponding to said main hook (2), a comfort hook (4), at least one metal cover (5) keeping bearing elements in position, more than one crankpins (7) which form a bearing for said main hook (2), said support hook (3) and said comfort hook (4), at least one main hook spring (8) which brings said main hook (2) to a desired position, at least one support hook spring (9) which brings said support hook (3) to a desired position, at least one comfort hook spring (10) which brings said comfort hook (4) to a desired position and which is used for locking the reclining backrests on the rear seats of passenger cars and which prevents the mechanical problems that the vibrations create with the car movement, **characterized in that** it comprises;
- at least one working surface on said main hook (2) being separated in two parts (12), with a plastic coated part contacting said support hook (3) and with a non coated part in operation with said comfort hook (4),
- at least one retaining surface (13) on said support hook (3) which prevents an opening pin (6) from being deformed or the opening pin (6) from being dislocated, and
- at least one point contact surface (14) on said main hook (2), which has a radius form and which prevents the noise created as a result of the vibration.

2. A lock mechanism (1) according to Claim 1, **characterized in that** it comprises more than one angled surface pawl (15) which provide for said main hook spring (8), said support hook spring (9) and said comfort hook spring (10) on a plastic cover (11) to fit into their positions during the mounting and for them to stay on said plastic cover (11).

3. A lock mechanism (1) according to Claim 1 or Claim 2, **characterized in that** it comprises at least one main hook protrusion (16) which is placed on said main hook (2) and enables the attachment of said main hook spring (8) and to prevent said spring from coming loose and losing function.

4. A lock mechanism (1) according to any one of the above claims, **characterized in that** it comprises at least one support hook protrusion (17) which is located on said support hook (3) and enables the attachment of said support hook spring (9) and to prevent it from coming loose and losing its function.

5. A lock mechanism (1) according to any one of the above claims, **characterized in that** it comprises at least one comfort hook protrusion (18) which is located on said comfort hook (4) and enables the attachment of said comfort hook spring (10) and enables preventing the same from coming loose and losing function.

6. A lock mechanism (1) according to any one of the above claims, **characterized in that** it comprises a comfort hook spring (10) whose surface contacting said comfort hook (4) is in 'S' form in order to prevent said comfort hook (4) from moving away from the narrow working surface by pushing the comfort hook (4) to the working surface during operation.

7. A lock mechanism (1) according to any one of the above claims, **characterized in that** it comprises more than one retainer (19) which is located on said plastic cover (11) and which enables to retain said main hook (2), said support hook (3) and said comfort hook (4).

8. A lock mechanism (1) according to any one of the above claims, **characterized in that** it comprises a main hook (2) whose surface contacting said crankpin (7) is plastic in order to prevent the vibration and the noise problem resulting from vibration.

9. A lock mechanism (1) according to any one of the above claims, **characterized in that** it comprises at least one main hook tie piece (20) which is located on said main hook (2) and which provides for decreasing the operation force of said main hook (2) and the contact surface of said main hook (2) with said metal cover (5).

10. A lock mechanism (1) according to any one of the above claims, **characterized in that** it comprises at least one support hook tie piece (21) which is located on said support hook (3) and which provides for decreasing the operation force of said support hook (3) and the contact surface of said support hook (3) with said metal cover (5).

11. A lock mechanism (1) according to any one of the above claims, **characterized in that** it comprises an opening pin (6) which has a form that will fit closely to said support hook (3) in order for the opening pin (6) to keep from being dislocated as a result of any impact.

## Patentansprüche

1. Verriegelungsmechanismus (1), umfassend einen Haupthaken (2), einen Stützhaken (3), der die dem Haupthaken (2) entsprechende Last trägt, einen Komforthaken (4), mindestens eine Metallabdeckung (5), die die tragenden Elemente in Position hält, mehr als einen Kurbelzapfen (7), die ein Lager für den Haupthaken (2), den Stützhaken (3) und den Komforthaken (4) bilden, mindestens eine Haupthakenfeder (8), die den Haupthaken (2) in eine gewünschte Position bringt, mindestens eine Stützhakenfeder (9), die den Stützhaken (3) in eine gewünschte Position bringt, mindestens eine Komforthakenfeder (10), die den Komforthaken (4) in eine gewünschte Position bringt und die zum Verriegeln der Kipprückenlehnen auf den Rücksitzen von Personenkraftwagen verwendet wird und die die mechanischen Probleme verhindert, die die Vibrationen mit der Fahrzeugbewegung verursachen, **dadurch gekennzeichnet, dass** er umfasst;
- mindestens eine Arbeitsfläche an dem Haupthaken (2), die in zwei Teile (12) getrennt ist, wobei ein kunststoffbeschichtetes Teil den Stützhaken (3) berührt und wobei ein nicht beschichtetes Teil mit dem Komforthaken (4) in Betrieb ist,
- mindestens eine Haltefläche (13) an dem Stützhaken (3), die verhindert, dass ein Öffnungsstift (6) verformt wird oder dass der Öffnungsstift (6) verschoben wird, und
- mindestens eine Punktkontaktfläche (14) an dem Haupthaken (2), die eine Radiusform aufweist und die das Geräusch verhindert, das aufgrund der Vibration erzeugt wird.

2. Verriegelungsmechanismus (1) nach Anspruch 1, **dadurch gekennzeichnet, dass** er mehr als eine abgewinkelte Oberflächensperrklinke (15) umfasst, die die Haupthakenfeder (8), die Stützhakenfeder (9) und die Komforthakenfeder (10) an einer Kunststoffabdeckung (11) vorsieht, um in ihre Positionen während der Montage zu passen und damit sie an der Kunststoffabdeckung (11) verbleiben.

3. Verriegelungsmechanismus (1) nach Anspruch 1 oder Anspruch 2, **dadurch gekennzeichnet, dass** er mindestens einen Haupthakenvorsprung (16) umfasst, der an dem Haupthaken (2) angeordnet ist und das Anbringen der Haupthakenfeder (8) ermöglicht und um zu verhindern, dass sich die Feder löst und ihre Funktion verliert.

4. Verriegelungsmechanismus (1) nach einem der vorstehenden Ansprüche, **dadurch gekennzeichnet, dass** er mindestens einen Stützhakenvorsprung (17) umfasst, der an dem Stützhaken (3) angeordnet ist und das Anbringen der Stützhakenfeder (9) ermöglicht und um zu verhindern, dass sie sich löst und ihre Funktion verliert.

5. Verriegelungsmechanismus (1) nach einem der vorstehenden Ansprüche, **dadurch gekennzeichnet, dass** er mindestens einen Komforthakenvorsprung (18) umfasst, der an dem Komforthaken (4) angeordnet ist und das Anbringen der Komforthakenfeder (10) ermöglicht und das Verhindern ermöglicht, dass sich diese löst und ihre Funktion verliert.

6. Verriegelungsmechanismus (1) nach einem der vorstehenden Ansprüche, **dadurch gekennzeichnet, dass** er eine Komforthakenfeder (10) umfasst, deren Oberfläche, die den Komforthaken (4) berührt, in "S" -Form vorliegt, um zu verhindern, dass sich der Komforthaken (4) von der schmalen Arbeitsfläche entfernt, indem der Komforthaken (4) während des Betriebs zur Arbeitsfläche gedrückt wird.

7. Verriegelungsmechanismus (1) nach einem der vorstehenden Ansprüche, **dadurch gekennzeichnet, dass** er mehr als einen Halter (19) umfasst, der an der Kunststoffabdeckung (11) angeordnet ist und der es ermöglicht, den Haupthaken (2) den Stützhaken (3) und den Komforthaken (4) zu halten.

8. Verriegelungsmechanismus (1) nach einem der vorstehenden Ansprüche, **dadurch gekennzeichnet, dass** er einen Haupthaken (2) umfasst, dessen Oberfläche, die den Kurbelzapfen (7) berührt, Kunststoff ist, um die Vibration und das Geräuschproblem, das sich aus der Vibration ergibt, zu verhindern.

9. Verriegelungsmechanismus (1) nach einem der vorstehenden Ansprüche, **dadurch gekennzeichnet, dass** er mindestens ein Haupthaken-Verbindungsstück (20) umfasst, das an dem Haupthaken (2) angeordnet ist und das zum Verringern der Betätigungskraft des Haupthakens (2) und der Kontaktfläche des Haupthakens (2) mit der Metallabdeckung (5) vorgesehen ist.

10. Verriegelungsmechanismus (1) nach einem der vorstehenden Ansprüche, **dadurch gekennzeichnet, dass** er mindestens ein Stützhaken-Verbindungsstück (21) umfasst, das an dem Stützhaken (3) angeordnet ist und das zum Verringern der Betätigungskraft des Stützhakens (3) und der Kontaktfläche des Stützhakens (3) mit der Metallabdeckung (5) vorgesehen ist.

11. Verriegelungsmechanismus (1) nach einem der vorstehenden Ansprüche, **dadurch gekennzeichnet, dass** er einen Öffnungsstift (6) umfasst, der eine Form aufweist, die eng an den Stützhaken (3) passen wird, damit der Öffnungsstift (6) nicht aufgrund eines Stoßes verrutscht wird.

## Revendications

1. Mécanisme de verrouillage (1) comprenant un crochet principal (2), un crochet de support (3) qui porte la charge correspondant audit crochet principal (2), un crochet de confort (4), au moins un couvercle métallique (5) maintenant des éléments paliers en position, plus d'un maneton (7) qui forme un palier pour ledit crochet principal (2), ledit crochet de support (3) et ledit crochet de confort (4), au moins un ressort (8) de crochet principal qui amène ledit crochet principal (2) dans une position souhaitée, au moins un ressort (9) de crochet de support qui amène ledit crochet de support (3) dans une position souhaitée, au moins un ressort (10) de crochet de confort qui amène ledit crochet de confort (4) dans une position souhaitée et qui est utilisé pour verrouiller les dossiers inclinables sur les sièges arrière de voitures particulières et qui empêche les problèmes mécaniques que les vibrations créent avec le mouvement de la voiture, **caractérisé en ce qu'il** comprend ;
- au moins une surface de travail sur ledit crochet principal (2) qui est séparée en deux parties (12), avec une partie revêtue de plastique en contact avec ledit crochet de support (3) et avec une partie non revêtue en fonctionnement avec ledit crochet de confort (4),
- au moins une surface de retenue (13) sur ledit crochet de support (3) qui empêche une broche d'ouverture (6) d'être déformé ou la broche d'ouverture (6) d'être disloqué, et
- au moins une surface de contact ponctuel (14) sur ledit crochet principal (2), qui présente une forme arrondie et qui empêche la production de bruit dû aux vibrations.

2. Mécanisme de verrouillage (1) selon la revendication 1, **caractérisé en ce qu'il** comprend plus d'un cliquet à surface inclinée (15) qui permet audit ressort (8) de crochet principal, audit ressort (9) de crochet de support et audit ressort (10) de crochet de confort sur un couvercle en plastique (11) de s'ajuster dans leurs positions durant le montage et leur permet de rester sur ledit couvercle en plastique (11).

3. Mécanisme de verrouillage (1) selon la revendication 1 ou la revendication 2, **caractérisé en ce qu'il** comprend au moins une saillie (16) de crochet principal qui est placée sur ledit crochet principal (2) et permet la fixation dudit ressort (8) de crochet principal et pour empêcher ledit ressort de se détacher et de perdre sa fonction.

4. Mécanisme de verrouillage (1) selon l'une quelconque des revendications ci-dessus, **caractérisé en ce qu'il** comprend au moins une saillie (17) de crochet de support qui est située sur ledit crochet de support (3) et permet la fixation dudit ressort (9) de crochet de support et pour l'empêcher de se détacher et de perdre sa fonction.

5. Mécanisme de verrouillage (1) selon l'une quelconque des revendications ci-dessus, **caractérisé en ce qu'il** comprend au moins une saillie (18) de crochet de confort qui est située sur ledit crochet de confort (4) et permet la fixation dudit ressort (10) de crochet de confort et permet de l'empêcher de se détacher et de perdre sa fonction.

6. Mécanisme de verrouillage (1) selon l'une quelconque des revendications ci-dessus, **caractérisé en ce qu'il** comprend un ressort (10) de crochet de confort dont la surface en contact avec ledit crochet de confort (4) est en forme de 'S' afin d'empêcher ledit crochet de confort (4) de s'éloigner de la surface de travail étroite en poussant le crochet de confort (4) vers la surface de travail durant le fonctionnement.

7. Mécanisme de verrouillage (1) selon l'une quelconque des revendications ci-dessus, **caractérisé en ce qu'il** comprend plus d'un élément de retenue (19) qui est situé sur ledit couvercle en plastique (11) et qui permet de retenir ledit crochet principal (2), ledit crochet de support (3) et ledit crochet de confort (4).

8. Mécanisme de verrouillage (1) selon l'une quelconque des revendications ci-dessus, **caractérisé en ce qu'il** comprend un crochet principal (2) dont la surface en contact avec ledit maneton (7) est en plastique afin d'empêcher le problème de bruit dû aux vibrations.

9. Mécanisme de verrouillage (1) selon l'une quelconque des revendications ci-dessus, **caractérisé en ce qu'il** comprend au moins une pièce de liaison (20) de crochet principal qui est située sur ledit crochet principal (2) et qui permet de diminuer la force d'actionnement dudit crochet principal (2) et la surface de contact dudit crochet principal (2) avec ledit couvercle métallique (5).

10. Mécanisme de verrouillage (1) selon l'une quelconque des revendications ci-dessus, **caractérisé en ce qu'il** comprend au moins une pièce de liaison (21) de crochet de support qui est située sur ledit crochet de support (3) et qui permet de diminuer la force d'actionnement dudit crochet de support (3) et la surface de contact dudit crochet de support (3) avec ledit couvercle métallique (5).

11. Mécanisme de verrouillage (1) selon l'une quelconque des revendications ci-dessus, **caractérisé en ce qu'il** comprend une broche d'ouverture (6) qui possède une forme qui s'ajuste étroitement audit crochet de support (3) afin d'éviter que la broche d'ouverture (6) ne soit disloquée à la suite d'un impact quelconque.
